Europäisches Patentamt

European Patent Office

Office européen des brevets

(19)

(11) Veröffentlichungsnummer: **0 046 895**
**B1**

(12) # EUROPÄISCHE PATENTSCHRIFT

(45) Veröffentlichungstag der Patentschrift:
04.12.85

(21) Anmeldenummer: 81106194.4

(22) Anmeldetag: 07.08.81

(51) Int. Cl.⁴: **G 02 C 7/04**

(54) **Harte Kontaktlinse.**

(30) Priorität: 22.08.80 DE 3031749

(43) Veröffentlichungstag der Anmeldung:
10.03.82 Patentblatt 82/10

(45) Bekanntmachung des Hinweises auf die Patenterteilung:
04.12.85 Patentblatt 85/49

(84) Benannte Vertragsstaaten:
CH DE FR GB IT LI

(56) Entgegenhaltungen:
EP - A - 0 033 141
DE - A - 2 938 957
GB - A - 1 067 732
GB - A - 1 156 454
GB - A - 2 024 450

Robert B. Mandell "Contact Lens Pratice" 3. Ausgabe
1981, S.129
Anpassanleitung "Menicon O2"
DOZ Nr. 9, 20 September 1982, S. 80

(73) Patentinhaber: Titmus Eurocon Kontaktlinsen GmbH &
Co. KG, Goldbacher Strasse 57, D-8750 Aschaffenburg
(DE)

(72) Erfinder: Holland, Rainer, Goethestrasse 53,
D-8752 Kleinostheim (DE)
Erfinder: Müller, Ulrich, Tannenstrasse 4,
D-8752 Johannesberg (DE)
Erfinder: Schwind, Herbert, Im Himbeergrund 9,
D-8752 Goldbach (DE)

(74) Vertreter: Nöth, Heinz et al, Steinsdorfstrasse 21 - 22,
D-8000 München 22 (DE)

## Beschreibung

Die Erfindung betrifft eine harte Corneakontaktlinse mit einer Rückfläche, bei der alle Schnitte mit Ebenen, die die optische Achse enthalten, Ellipsen mit einem Scheitelkrümmungsradius von 6,0—9,0 mm sind.

Um eine verbesserte Anpassung der Rückfläche der harten Kontaktlinse an die Vorderfläche der menschlichen Cornea zu gewinnen, ist es bekannt, die Rückfläche der Kontaktlinse, welche auf der Cornea beim Gebrauch aufliegt, asphärisch auszubilden. Man geht dabei davon aus, daß sehr steile Corneae eine numerische Exzentrizität von 0,9 (gerade noch elliptisch) benötigen und bei sehr flachen Corneae eine hyperbolische (numerische Exzentrizität = 1,1) Rückfläche verwendet werden kann. In den meisten Fällen bietet sich jedoch eine parabolische (numerische Exzentrizität 1,0) Rückfläche an. Trotz intensiver Bemühungen ist es bisher nicht gelungen, für einen relativ breiten Scheitelbrechwertbereich mit einer standardisierten Innengeometrie der harten Kontaktlinse für die Mehrzahl aller Träger auszukommen. Bei harten Kontaktlinsen ist es hierzu auch bekanntgeworden, die Rückfläche mit verschiedenen aufeinanderfolgenden Innenradien zu versehen. Es entstehen dabei jedoch ringförmige begrenzte Zonen relativ hohen Druckes in den Übergangszonen der Radien, so daß für die gesamte Linsenfläche eine gleichmäßige Lagerung auf einem gleichmäßigen Tränenfilm nicht erzielt wird.

Ferner ist aus der GB-A-1 156 454 bzw. der im wesentlichen inhaltgleichen DE-B-1 497 626 ein Corneakontaktlinsenprobesatz bekannt, bei dem die der Cornea zugewandte Oberfläche (Rückfläche) der Linsen des Satzes Scheitelkrümmungsradien im Bereich von 6,50—8,50 mm in unterteilten Stufen von 0,05 mm sowie Exzentrizitäten im Bereich von 0,4—1,6 in Stufen von 0,1 Einheiten aufweist. Die mit diesem Corneakontaktlinsenprobesatz angestrebte genaue und angenehme und mit erhöhtem Tragkomfort verbundene Anpassung wird erkauft durch eine große Anzahl von Corneakontaktlinsen im Probesatz.

Aufgabe der im Anspruch 1 gekennzeichneten Erfindung ist es daher, eine harte Corneakontaktlinse der eingangs genannten Art zu schaffen, die bei Erzielung der erforderlichen physiologischen Verträglichkeit eine Standardisierung, d. h. Verringerung der Linsenanzahl des kompletten Anpaßsatzes, gewährleistet.

Bei Scheitelkrümmungsradien von 7,2—8,4 mm beträgt die numerische Exzentrizität der elliptischen Rückfläche der harten Kontaktlinse bevorzugt 0,3— <0,4.

Hierdurch läßt sich die Anzahl der Durchmesser auf einen bestimmten Durchmesser, z. B. auf 9,3 mm als Standarddurchmesser, reduzieren, für den eine Exzentrizität von 0,3 bevorzugt wird.

Dadurch, daß die elliptische Innenkurve der Rückfläche in Richtung zum Linsenrand hin tangential in eine umlaufende Bevelzone mit kreissegmentförmigem Querschnitt übergeht, die zum elliptischen Kurvenverlauf einen entgegengesetzten Kurvenverlauf nimmt, läßt sich ein verbessertes dynamisches Verhalten der Linse, insbesondere bei Augenbewegungen und Lidbewegungen, erzielen. Beim Verschieben der Linse wird vermieden, daß sich der Linsenrand aus einem steileren Augenbereich in einen flacheren Augenbereich »eingräbt«. Wesentlich ist dabei, daß die elliptische Innenkurve der Linsenrückfläche übergangslos in die im Querschnitt kreissegmentförmige Bevelzone, welche einen entgegengesetzten Kurvenverlauf nimmt, sich fortsetzt, d. h., im Übergangsbereich von elliptischer Innenkurve in die kreissegmentförmige Bevelzone besitzen diese beiden Bereiche eine gemeinsame Tangente. Es bildet sich aufgrund der in ihrer Form genau festgelegten Bevelzone ein Tränenflüssigkeitsmeniskus, durch den die Beweglichkeit der Linse unter Kontrolle gehalten wird. Es wird hierdurch außer einer guten Beweglichkeit auch eine gute Zentrierung der Linse erreicht. Die Bevelzone ist so ausgebildet, daß bei horizontaler Anordnung der Linse die Querschnittslinie der Bevelzone am Linsenrand auf eine durch den Linsenrand gelegte vertikale Linie im rechten Winkel auftrifft.

Es hat sich erwiesen, daß man für sämtliche Scheitelkrümmungsradien eines Cornea-Kontaktlinsen-Durchmessers mit einer einzigen numerischen Exzentrizität auskommen kann. Hierdurch läßt sich die Anzahl der Durchmesser auf eine stark reduzierte Anzahl benötigter Cornea-Kontaktlinsen-Durchmesser reduzieren, ohne den Anpaßerfolg — gemessen an den bekannten, äußerst umfangreich gestaffelten Systemen — zu verringern.

Es eignen sich praktisch alle Hartlinsenmaterialien. Bevorzugt kommen jedoch Celluloseacetobutyrat, Hartsiliconcopolymere, Polymethylmethacrylat sowie transparente, augenverträgliche Polycarbonate zur Anwendung.

In den Figuren ist ein Ausführungsbeispiel der Erfindung schematisch dargestellt. Anhand dieser Figuren soll die Erfindung noch näher erläutert werden. Es zeigt

Fig. 1 einen Schnitt einer harten Kontaktlinse und

Fig. 2 in vergrößerter Darstellung einen Schnitt durch die Bevelzone eines anderen Ausführungsbeispiels.

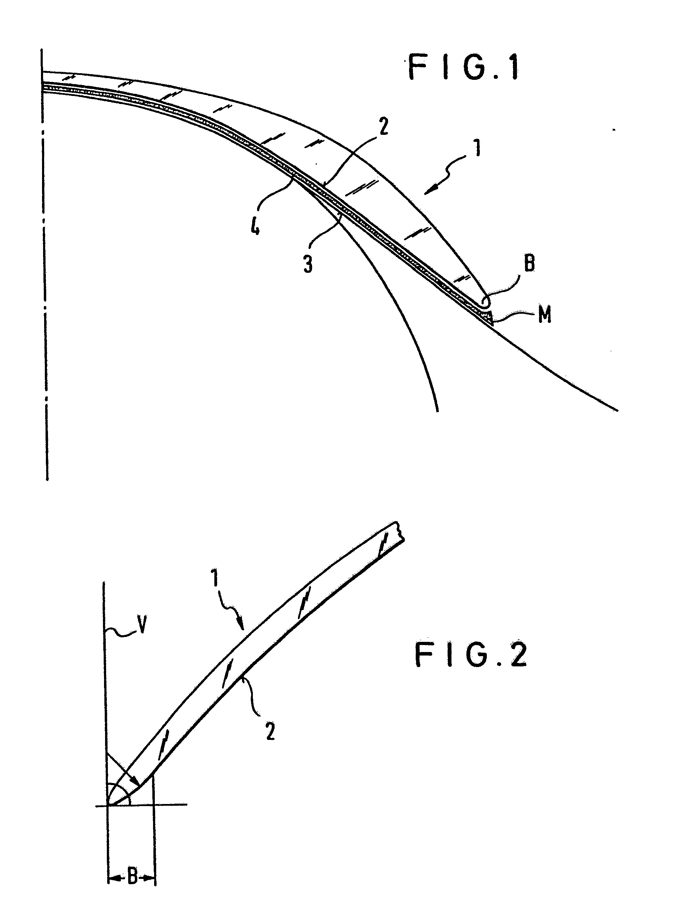

Eine in den Figuren dargestellte Kontaktlinse 1 bsitzt eine Rückfläche 2 mit elliptischer Krümmung und, wie in der Fig. 2 näher dargestellt ist, eine umlaufende ringförmige Bevelzone B mit einer Breite von insbesondere 0,35 mm. Wie die Figuren zeigen, geht die elliptische Innenkurve der Rückfläche 2 der harten Kontaktlinse 1 nahtlos, d. h. tangential, in die kreissegmentförmige Fläche der Bevelzone B über. Die Schnittlinie der Bevelzone B trifft im rechten Winkel auf eine durch den äußeren Rand der Linse gelegte Vertikale V im rechten Winkel auf, wie das in der Fig. 2 dargestellt ist.

Die dargestellte elliptische Krümmung der Rückfläche 2 und der kreissegmentförmige Querschnitt der Bevelzone B, die nahtlos bzw. tangential (gemeinsame Tangente im Übergangsbereich) ineinander übergehen, lassen sich z. B. mit Hilfe eines elliptischen und eines kreissegmentförmigen Werkzeuges, insbesondere Diamanten, herstellen, die in der Maschine in geeigneter Weise miteinander kombiniert zusammenwirken.

Wie aus der Fig. 1 zu ersehen ist, ergibt sich eine gleichförmige Auflage der Rückfläche 2 der harten Kontaktlinse auf der Augenoberfläche 3. Zwischen der Augenoberfläche 3 und der Rückfläche 2 bildet sich ein Tränenfilm 4, der im Bereich der Bevelzone B einen Meniskus M aufweist. Durch den speziellen Verlauf der Bevelzone wird des weiteren erzielt, daß beim Verschieben der Linse aus einem steileren Augenbereich in einen flacheren Augenbereich sich die Linse nicht eingräbt.

Im folgenden wird noch ein Ausführungsbeispiel im einzelnen beschrieben.

Der Linsendurchmesser beträgt 9,3 mm.

Die Scheitelkrümmungsradien der elliptischen Rückflächen des Linsensatzes liegen im Bereich von 6,0 bis 9,0 mm mit einer Abstufung von 0,10 mm.

Die numerische Exzentrizität der elliptischen Rückfläche beträgt 0,39.

Die Breite der Bevelzone beträgt 0,35 mm.

Geeignetes Linsenmaterial ist: reines Polymethylmethacrylat, reines Celluloseacetobutyrat, Silikonpolymer, bestehend aus 25—75% Silikon und 75—25% Polymethylmethacrylat sowie reinem Silikonharz.

## Patentansprüche

1. Harte Corneakontaktlinse mit einer Rückfläche, bei der alle Schnitte mit Ebenen, die die optische Achse enthalten, Ellipsen mit einem Scheitelkrümmungsradius von 6,0 bis 9,0 mm sind, dadurch gekennzeichnet, daß für die Verwendung in einem standardisierten Linsensatz die Ellipse eine numerische Exzentrizität aus dem Bereich von 0,2 bis <0,4 bsitzt, daß die elliptische Rückfläche in Richtung zum Linsenrand hin in eine umlaufende Bevelzone mit kreissegmentförmigem Querschnitt übergeht, der eine zum elliptischen Kurvenverlauf entgegengesetzte Krümmung aufweist und beim Übergang eine gemeinsame Tangente mit dem elliptischen Kurvenverlauf der Rückfläche hat, und daß bei horizontaler Anordnung der Linse die Querschnittslinie der Bevelzone am Linsenrand auf eine durch den Linsenrand gelegte vertikale Linie im rechten Winkel auftrifft.

2. Kontaktlinse nach Anspruch 1 mit einem Scheitelkrümmungsradius der elliptischen Schnittlinien von 7,2 bis 8,4 mm, dadurch gekennzeichnet, daß die numerische Exzentrizität der elliptischen Schnittlinien 0,3 bis <0,4 beträgt.

3. Kontaktlinse nach einem der Ansprüche 1 oder 2 mit einem Linsendurchmesser von 9,3 mm und einem Scheitelkrümmungsradius der elliptischen Schnittlinien von 7,2 bis 8,4 mm, dadurch gekennzeichnet, daß die numerische Exzentrizität der elliptischen Schnittlinien 0,3 beträgt.

4. Kontaktlinse nach Anspruch 1, dadurch gekennzeichnet, daß die Breite der Bevelzone 0,1 bis 1,0 mm, insbesondere 0,35 mm, beträgt.

## Claims

1. A hard corneal contact lens having a rear surface in which all sections with planes which contain the optical axis are ellipses with an apex radius of curvature of 6.0 to 9.0 mm, characterised in that for use in a standardised lens system the ellipse has a numerical eccentricity in the range of 0.2 to <0.4, that the elliptical rear surface, in a direction towards the edge of the lens, makes a transition into a peripheral bevel zone with a cross-section of circular segment form, which has a curvature opposite to the elliptical curve configuration and which at the transition has a common tangent with the elliptical curve configuration of the rear surface, and that when the lens is arranged horizontally the cross-sectional line of the bevel zone at the edge of the lens meets in right-angled relationship a vertical line through the edge of the lens.

2. A contact lens according to claim 1 having an apex radius of curvature of the elliptical section lines of from 7.2 to 8.4 mm, characterised in that the numerical eccentricity of the elliptical section lines is from 0.3 to <0.4.

3. A contact lens according to one of claims 1 or 2 with a lens diameter of 9.3 mm and an apex radius of curvature of the elliptical section lines of from 7.2 to 8.4 mm, characterised in that the numerical eccentricity of the elliptical section lines is 0.3.

4. A contact lens according to claim 1 characterised in that the width of the bevel zone is from 0.1 to 1.0 mm, in particular 0.35 mm.

## Revendications

1. Lentille de contact cornéenne dure comportant une face postérieure dans laquelle toutes les intersections par des plans contenant l'axe optique sont des ellipses ayant aux sommets un rayon de courbure de 6,0 à 9,0 mm, caractérisée en ce que, pour son utilisation dans un jeu de lentilles standardisées, l'ellipse a une excentricité numérique dans la plage de 0,2 à <0,4, que la face postérieure elliptique se raccorde, en direction du bord de la lentille, à une zone biseautée périphérique ayant une section transversale en forme d'arc de cercle, laquelle présente une courbure opposée au tracé de la courbe elliptique et a dans la zone de transition une tangente commune avec le tracé de courbure elliptique de la face postérieure, et que, la lentille étant placée horizontalement, la ligne du contour en section transversale de la zone biseautée sur le bord de la lentille vient rencontrer à angle droit une ligne verticale passant par le bord de la lentille.

2. Lentille de contact selon la revendication 1 présentant un rayon de courbure aux sommets des lignes d'intersection elliptiques compris entre 7,2 et 8,4 mm, caractérisée en ce que l'excentricité numérique des lignes d'intersection elliptiques est de 0,3 à <0,4.

3. Lentille de contact selon une des revendications 1 ou 2 présentant un diamètre de lentille de 9,3 mm et un rayon de courbure aux sommets des lignes d'intersection elliptiques de 7,2 à 8,4 mm, caractérisée en ce que l'excentricité numérique des lignes d'intersection elliptiques est 0,3.

4. Lentille de contact selon la revendication 1, caractérisée en ce que la largeur de la zone biseautée est de 0,1 à 1,0 mm, notamment de 0,35 mm.

# FIG.1

# FIG.2